# EUROPEAN PATENT APPLICATION

(11) **EP 1 947 828 A1**
(43) Date of publication of application: **23.07.2008**
(21) Application number: 08000777.6
(22) Date of filing: 16.01.2008
(51) Int. Cl.: H04M 1/247

(54) **Mobile communication terminal, method of interconnecting specific content to abbreviated number thereof and method for playing abbreviated number interconnected content thereof**

(30) Priority: 19.01.2007 KR 20070006324
(71) Applicant: LG Electronics Inc., Seoul 150-010 (KR)
(72) Inventor: Kim, Jong Hwan, Kumchon-gu Seoul 153-801 (KR)
(74) Representative: Katérle, Axel

(57) **Abstract**

A method of operating a mobile communication terminal. The method includes receiving a signal corresponding to a number to be interconnected with a folder stored on the mobile communication terminal, and interconnecting the folder with the selected number such that when the number is entered on the terminal in a prescribed manner, the folder is automatically displayed on a display of the terminal.

## Description

This application claims priority to Korean Patent Application No. 10-2007-0006324, filed on January 19, 2007, which is hereby incorporated by reference as if fully set forth herein.

### BACKGROUND OF THE INVENTION

### Field of the Invention

The present invention relates to a mobile communication terminal and corresponding method for interconnecting a specific content to an abbreviated number and for playing a content interconnected with an abbreviated number.

### Discussion of the Related Art

Mobile communication terminals now provide many additional functions besides the basic call function. For example, users can now access the Internet, play videos, listen to music, perform scheduling tasks, play games, etc. In addition, with the increase in functions, the amount of menu options provided on the terminal has also increased.

Further, users can now store a variety of content on their terminal. For example, users can store pictures, music files (e.g., MP3 files), word document files, phonebook listings, as well as other types of data. Therefore, it is often cumbersome and time consuming for a user to search through the variety of different content stored on their terminal.

### SUMMARY OF THE INVENTION

Accordingly, one object of the present invention is to address the above-noted and other problems of the present invention.

Another object of the present invention is to provide a mobile terminal and corresponding method of interconnecting a specific content to an abbreviated number in a mobile communication terminal.

Yet another object of the present invention is to provide a mobile terminal and corresponding method of playing a particular content interconnected with an abbreviated number.

To achieve these objects and other advantages and in accordance with the purpose of the invention, as embodied and broadly described herein, the present invention provides in one aspect a method of operating a mobile communication terminal. The method includes receiving a signal corresponding to a number to be interconnected with a folder stored on the mobile communication terminal, and interconnecting the folder with the selected number such that when the number is entered on the terminal in a prescribed manner, the folder is automatically displayed on a display of the terminal. The present invention also provides a corresponding mobile communication terminal.

In another aspect, the present invention provides a method of operating a mobile communication terminal, which includes receiving a signal corresponding to a number interconnected with a folder stored on the mobile communication terminal, and playing content stored within the folder interconnected to the number when the number is entered on the terminal in a prescribed manner. The present invention also provides a corresponding mobile communication terminal.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile communication terminal according to one embodiment of the present invention;

FIG. 2 is a flowchart of a method of interconnecting a particular folder with an abbreviated number in a mobile communication terminal according to one embodiment of the present invention;

FIG. 3 is a flowchart of a method of interconnecting a particular content with an abbreviated number in a mobile communication terminal according to one embodiment of the present invention;

FIG. 4 is a flowchart of a method of playing a content in a mobile communication terminal according to one embodiment of the present invention;

FIGS. 5(a)-5(c) are overviews of screen shots of a terminal when interconnecting a particular folder with an abbreviated number by the method shown in FIG. 2;

FIGS. 6(a)-6(c) are overviews of screen shots of a terminal when interconnecting a particular content with an abbreviated number by the method shown in FIG. 4;

FIGS. 7(a) and 7(b) are overviews of screen shots of a terminal when playing a particular image content interconnected with a particular telephone number according to an embodiment of the present invention;

FIG. 8 is an overview of a screen shot of a terminal when playing a particular image content interconnected with a particular message recipient according to an embodiment of the present invention;

FIGS. 9(a) and 9(b) are overviews of screen shots of a terminal when playing a particular music content interconnected with a particular message recipient according to an embodiment of the present invention; and

FIGS. 10(a) and 10(b) are overviews of screen shots of a terminal when playing a particular music content interconnected according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The mobile communication terminal described in the present specification includes any portable electronic device. For instance, the mobile terminal may be a mobile phone, a digital broadcast terminal, an MP3 player, a PDA (personal digital assistant), a PMP (portable multimedia player) or the like.

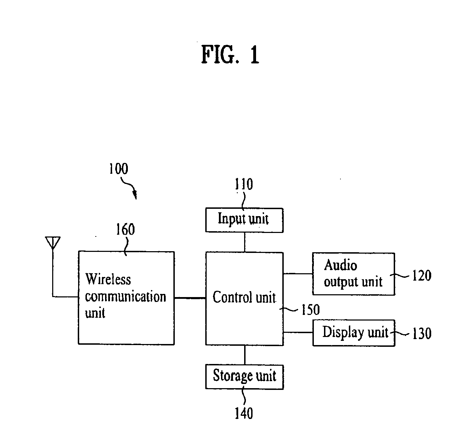

FIG. 1 is a block diagram of a mobile communication terminal 100 according to one embodiment of the present invention. As shown, the mobile communication terminal 100 includes an input unit 110, an audio output unit 120, a display unit 130, a storage unit 140, a control unit 150, and a wireless communication unit 160.

The control unit 150 controls the overall operation of the mobile terminal 100. The storage unit 140 stores a variety of contents (data) such as music files, pictures, phonebook listings, word documents, information input by a user, and other data used in operating the mobile terminal 100.

The input unit 110 includes a plurality of keys or buttons that the user may select to input information into the terminal 100. The input unit 110 may also include a touch screen or touch pad that the user can touch to enter a particular command or to input information into the terminal 100. When the input unit 110 includes such a touch screen or touch pad, the touch screen or touch pad can be combined with the display unit 130 such that the input unit 110 can be minimized or eliminated.

In addition, the display unit 130 displays a variety of information to the user such as a status of the terminal 100, images stored in the terminal 100, movies or other broadcasts, etc. The display unit 130 also displays a plurality of menu options that the user can select to perform different functions on the terminal 100.

The wireless communication unit 160 wirelessly communicates with other mobile terminals via a communication network. The wireless communication unit 160 is also used to connect the terminal 100 to the Internet. The control unit 150 controls the above-described units to perform the overall operations of the terminal 100.

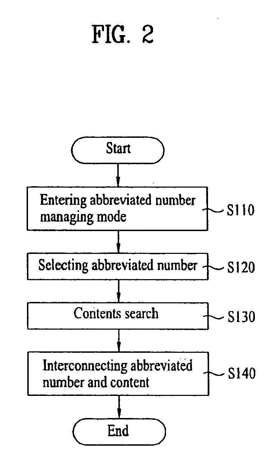

Next, FIG. 2 is a flowchart of a method of interconnecting a number with a particular folder in a mobile communication terminal according to one embodiment of the present invention. FIG. 1 will also be referred to in this description. As shown, an abbreviated number managing mode of the mobile communication terminal 100 is entered when the user of the terminal 100 selects a corresponding menu option on the input unit 110 (S110).

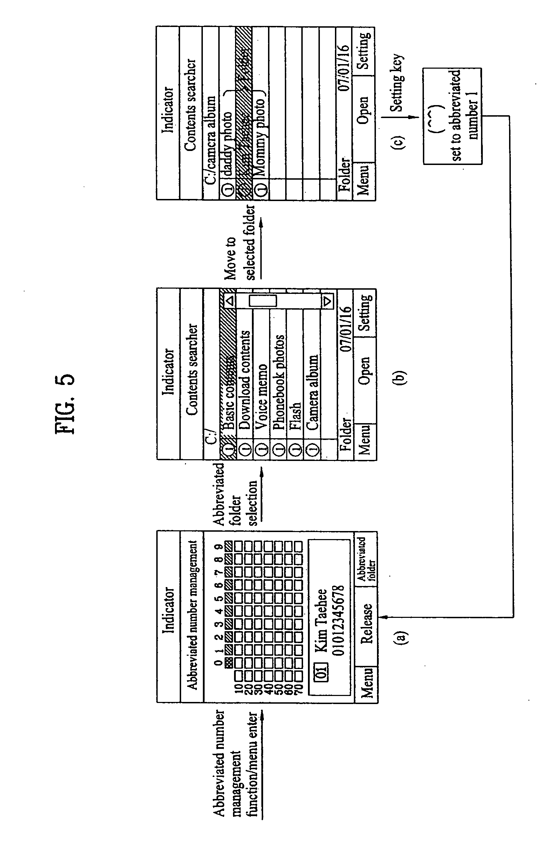

FIG. 5(a) is an overview of a screen shot showing an example of the terminal when this mode is entered. In this example, the abbreviated number managing image has a table format that includes a plurality of numbers that the user may select to interconnect with a particular folder. However, the numbers may be listed in any other format such a list of numbers.

Then, as shown in FIG. 2, the user selects a number from the displayed numbers (S120). For example, the user may select a corresponding number on a keypad of the input unit 110 or may use a directional key to highlight one of the displayed numbers and then press an enter or select button. Alternatively, when the input unit 110 includes a touch screen, the user may simply touch a corresponding number to select that number.

Subsequently, the user can then select the "abbreviated folder" menu option (shown in FIG. 5(a)), and the control unit 150 searches for folders that are to be mapped to the selected number (S130). FIG. 5(b) illustrates an example of different directories including folders that may be mapped or interlinked with the selected number. The folders may be displayed in a list, as thumbnails or in any other manner that assists the user in determining types of contents installed in the folders.

Then, when the user selects one of the displayed directories, the control unit 150 displays the folders included for the selected directory. For example, FIG. 5(c) illustrates different folders that are included in the directory "Camera album." Then, when the user selects one of the folders, the control unit 150 sets or interconnects the selected number with the selected folder (S140).

For example, the user can select the "Setting" menu option in FIG. 5(c) to command the control unit 150 to interlock or interconnect the selected number with the selected folder. In the example shown in FIGS. 5(a)-5(c), the user selected the number "01" to be interconnected with the folder "Kim Taehee". The user may also release a previously set number by selecting the "Release" menu option in FIG. 5(a).

Thus, in this embodiment, when the user presses the number "01" for a particular period of time, the control unit 150 automatically displays the contents included in the folder "Kim Taehee" on the display unit 130. The user may also enter the number "01" and then select another key such as an enter key or a # sign key to command the control unit 150 to display the contents in the folder. That is, the set number "01" becomes a hot key that the user can press to immediately and automatically perform the desired function. Further, in the example shown in FIG. 5(c), the number one displayed next to the folder name means there is one image included in the folder.

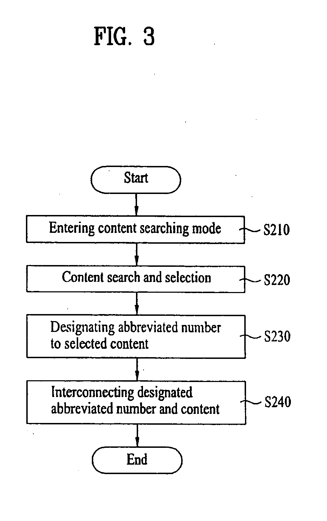

Next, FIG. 3 is a flowchart of a method of interconnecting a particular content with an abbreviated number in a mobile communication terminal according to one embodiment of the present invention. FIG. 1 will also be referred to in this description.

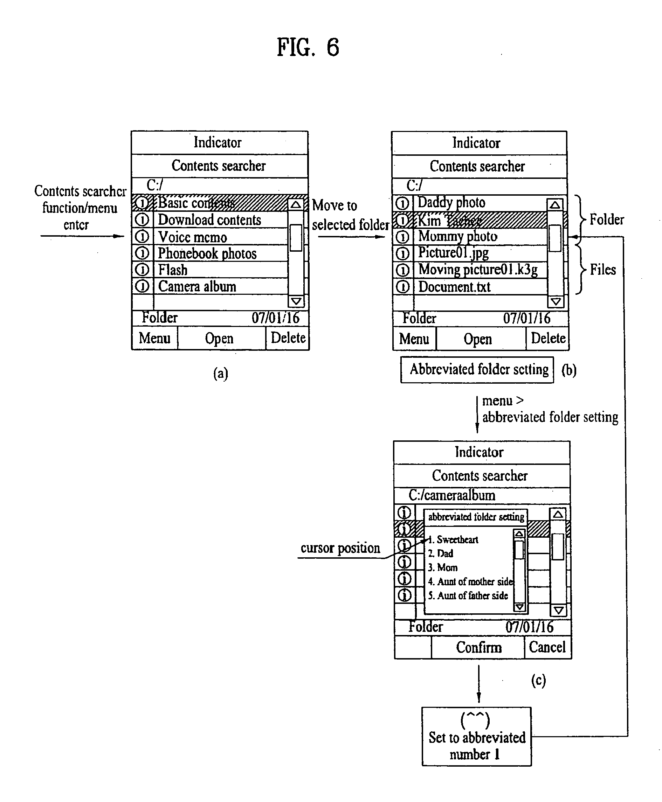

Similar to the embodiment in FIG. 2, the users selects a content searching mode (S210). FIG. 6(a) illustrates a screen shot of the terminal 100 when the user enters the content searching mode. This is similar to the screen shot shown in FIG. 5(b). The user then selects a particular directory of contents (S220), and the control unit 150 displays contents in the selected directory.

For example, FIGS. 6(a) and 6(b) illustrate the user selecting the "Basic Contents" directory and the control unit 150 displaying all of the contents in that directory. Note the contents include folders and individual files. The user then selects a specific folder to be interconnected to a selected number (S220), and the control unit 150 interconnects the selected number with the selected folder (or single file) (S240).

For example, in FIG. 6(b), the user selects the folder "Kim Taehee" and then selects the Menu option to interconnect a particular number with the selected folder. As shown in FIG. 6(c), the control unit 150 displays a list of available numbers that may be interconnected with the selected folder. Thus, the user can select the option "1. Sweetheart" to assign the number "1" with the selected folder by pressing or touching the "Confirm" button. Therefore, when the user presses the number "1" for a predetermined amount of time or followed by another command key, the control unit 150 automatically displays the contents included in the folder interlocked with the number "1."

Thus, when a user wants to show other people pictures of his girlfriend, for example, the user can simply press the number that was previously interconnected with the selected number. Thus, the user can quickly move to the contents included in the desired folder by entering only a single command. The user can also interconnect a single file shown in FIG. 6(b), for example, with a selected number.

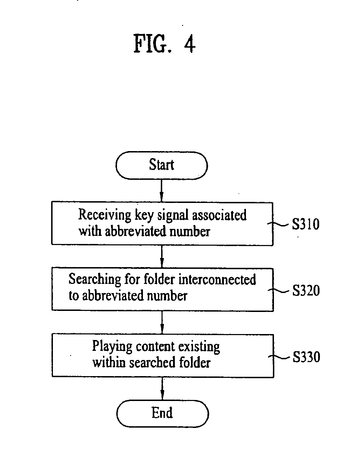

Next, FIG. 4 is a flowchart of a method of playing a content in a mobile communication terminal according to one embodiment of the present invention. FIG. 1 will also be referred to in this description.

As shown in FIG. 4, the user enters a key signal associated with an abbreviated number (S310). For example, the user can enter a particular number and command or enter key using the input unit 110. Alternatively, the number can be automatically inputted by receiving another signal via the wireless communication unit 110. The number may also be input in other various ways so long as the control unit 150 is aware the number has been input.

For example, and as discussed above, the user can press a particular number for a predetermined amount of time, or can press the number followed by another command key such as the "#" sign key. Then, the control unit 150 searches for the folder interconnected with the entered number (S320). In one example, the control unit 150 searches the storage unit 140 for the folder interlocked with the entered number.

The content or contents in the interlocked folder are then played (when a music or video file) or displayed (when an image file, etc.). In particular, the content can be played using a program stored in the mobile communication terminal 100. Therefore, in this embodiment, when the user presses a number for a particular period of time, for example, the control unit 150 automatically executes a content (or contents) included in the corresponding interconnected folder.

When the folder includes multiple contents, the control unit 150 can sequentially execute the files, randomly execute the files, or in any other arrangement set by the user. The control unit 150 can also sequentially or randomly execute files having a similar type or extension. That is, the user can use the appropriate menu options provided on the terminal to define in what manner the control unit 150 is to execute files included in a particular folder. A default method may also be advantageously set such that the control unit 150 always executes the files in a particular order set as the default mode (e.g., sequentially based on last modified dates, etc.).

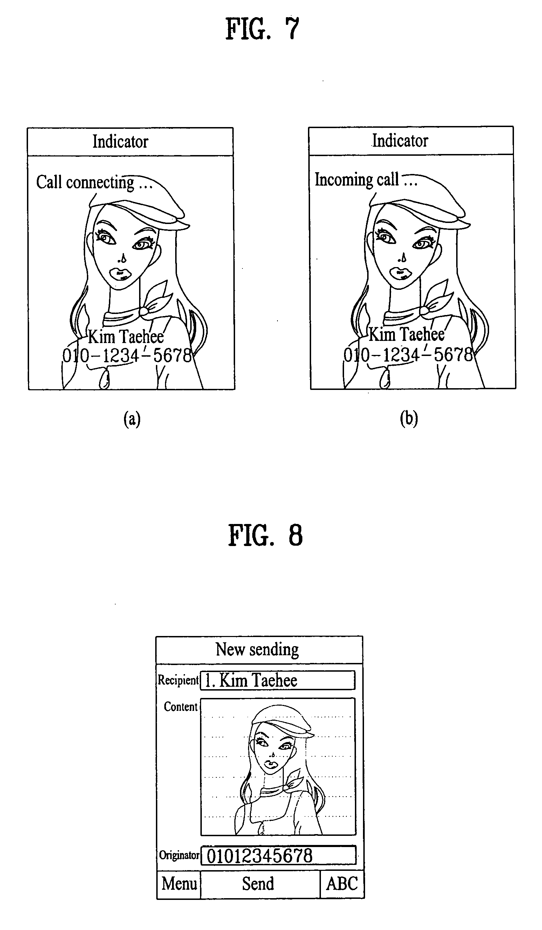

Further, the content playing method in the mobile communication terminal according to FIG. 4 can also be assigned to particular options on the terminal such as when an incoming or outgoing call function is performed, when a message editor function is performed, etc. For example. FIGS. 7(a) and 7(b) illustrate an embodiment in which the user has set the incoming and outgoing call functions to also playback a particular interconnected folder or file when the function is performed.

In more detail, and as shown in FIG. 7(a), the photo of the person being called is displayed when that person is called. That is, the user has previously defined the folder for "Kim Taehee" to be interconnected with her phone number such that when Kim Taehee is called, her folder contents are displayed on the display unit 130. FIG. 7(b) is similar to FIG. 7(a), except the folder for "Kim Taehee" is executed when she calls the user (i.e., an incoming call).

Thus, in FIGS. 7(a) and 7(b), the user has interconnected the number 1 to the 'Kim Taehee' folder, and simultaneously, to a phone number corresponding to a name of 'Kim Taehee' in the user's phonebook. Thus, when the communication unit 160 receives a wireless signal from a phone number corresponding to 'Kim Taehee', an image existing within the 'Kim Taehee' folder is displayed on the display unit 130. Further, the image displayed can be a default image of 'Kim Taehee' that is included in the interconnected folder, a sequential display of images included in the folder, a random display of images included in the folder, etc. A similar concept applies to when the user calls the phone number associated with "Kim Taehee" (i.e., an outgoing call).

Optionally, instead of displaying an image included in the 'Kim Taehee' folder, a music or bell tone file may be executed when the folder includes music or bell tone files. That is, the music or bell sound included in the interconnected folder is played. It is also possible to display the image and play a particular sound file associated with the image.

In addition, FIG. 7 illustrates features when the user has assigned a particular number with a folder and with a calling function. In a similar manner, the user may also assign a particular number with a folder and a message function (e.g., SMS text message). For example, FIG. 8 is an overview of a screen shot of a terminal displaying a particular image content interconnected with a particular message recipient according to an embodiment of the present invention.

As shown FIG. 8, when the user selects a message sending function to send a message to the phone number associated with 'Kim Taehee', the contents included in the folder 'Kim Taehee' are executed (in this instance there is only one image file in the folder so that the one image file is displayed as a background image during the message sending process). That is, the image is a still picture. However, as discussed above, it is also possible to play a music file, a video file, a ring tone, etc.

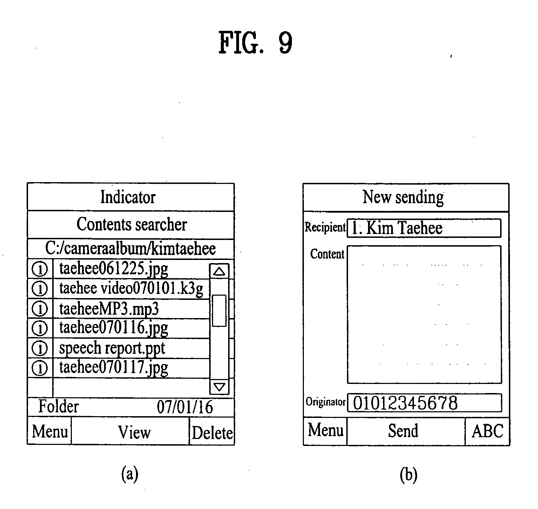

For example. FIG. 9(a) illustrates a plurality of files existing in the 'Kim Taehee' folder (that has been previously interconnected with the number one and the message sending function). In this example, a music file existing within the 'Kim Taehee' folder can be played while the user is writing a message to 'Kim Taehee'. That is, the file having the extension 'mp3' is played.

Further, if there is more than one music file, the control unit 150 can sequentially play the 'mp3' files, randomly play the 'mp3' files, and the like. The control unit 150 can also display an image file included in the directory as a background image (as discussed above). The user can also set an option using the appropriate menu options on how the control unit 150 is to play or execute files included in a designated folder.

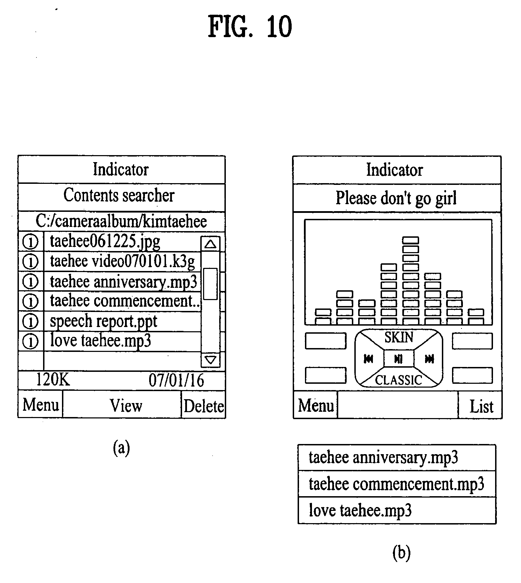

In addition, the user may also have a particular image file or music file played by entering a number corresponding to a previously interconnected folder and entering another key linked to a music or video play mode. FIGS. 10(a) and 10(b) illustrate these features.

Referring to Fig. 10, when a key signal corresponding to a music play mode and the number 1 are input together, the control unit 150 selectively plays a music file existing within the 'Kim Taehee' folder interconnected to the number 1. A similar concept applies to the control unit 150 playing a video or image file included in the interconnected folder.

In addition, individual files included in an interconnected folder can also be assigned a particular number such that when the user enters the first number corresponding the interconnected folder and a second number corresponding to an interconnected file within the interconnected folder, the interconnected file may be automatically executed.

For example, the user can designate the number "1" to correspond to the 'Kim Taehee' folder and the number "9" to correspond with the "taehee video070101.k3g" video file (see FIG. 10(a)). Then, when the user presses the number 1 for a predetermined amount of time, followed by the number "9", the control unit 150 plays the "taehee video070101.k3g" video file.

Further, the contents stored in the folder interconnected to the abbreviated number can be transferred or copied to another folder by key manipulation of the input unit 110. Thus, the stored content can be managed more efficiently.

Accordingly, the present invention provides several advantages.

First, the present invention allows a user to interconnect a content existing within their mobile communication terminal with a number, thereby allowing the user to more effectively manage and use the files or contents stored in their mobile terminal.

Secondly, the present invention allows the user to interconnect contents with particular functions such as a calling function, a message writing function, an email function, an Internet accessing function, etc.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of operating a mobile communication terminal, the method comprising:
receiving a signal corresponding to a number to be interconnected with a folder stored on the mobile communication terminal; and
interconnecting the folder with the selected number such that when the number is entered on the terminal in a prescribed manner, the folder is automatically displayed on a display of the terminal.

2. The method of claim 1, further comprising:
entering a number managing mode on the mobile communication terminal such that the number can be selected.

3. The method of claim 2, further comprising:
searching for folders on the mobile terminal when the signal corresponding to the selected number is received.

4. The method of claim 2, further comprising:
displaying a table or list of numbers that may be selected to be interconnected with the folder when the number managing mode is entered.

5. The method of claim 3, wherein searching step displays folders on the mobile terminal as a list of folders or as thumbnails.

6. The method of claim 1, further comprising:
interconnecting a particular function on the mobile communication terminal with the folder and the number such that when the particular function is executed on the mobile communication terminal, a content included in the folder is executed.

7. The method of claim 6, wherein the particular function is a calling function or a message writing function.

8. A method of operating a mobile communication terminal, the method comprising:
receiving a signal corresponding to a number interconnected with a folder stored on the mobile communication terminal; and
playing content stored within the folder interconnected to the number when the number is entered on the terminal in a prescribed manner.

9. The method of claim 8, wherein the playing step plays the content stored in the folder when the number is input into the terminal followed by another input command.

10. The method of claim 8, wherein the receiving step receives the signal corresponding to the number comprises via a wireless signal from another party.

11. The method of claim 10, wherein the wireless signal comprises at least one of a call signal and a message signal.

12. The method of claim 8, wherein the playing step plays the content stored in the interconnected folder when the received signal is a signal for making a call to a phone number corresponding to the number.

13. The method of claim 9, wherein the playing step plays the content stored in the interconnected folder when the received signal is a signal for creating a message to send to a phone number corresponding to the number.

14. The method of claim 8, wherein the content to be played comprises at least one of an image file, a bell sound file, and a music file.

15. The method of claim 8, wherein the content in the interconnected folder includes a plurality of contents, and
wherein the playing step plays one of the plurality of contents when the signal received by the receiving step includes a specific command to play said one of the plurality of contents in addition to the input number.

16. The method of claim 15, wherein the specific command indicates to play one of a music file, a bell sound file, and a video file that is stored in the folder.

17. The method of claim 15, wherein the specific command comprises a command to play one of a default content file among the plurality of contents, to sequential play contents having a same type in the folder, and to randomly play the contents having of the same type.

18. The method of claim 8, further comprising:
moving or copying the content to another folder different from the folder interconnected to the number.

19. A mobile communication terminal, comprising:
an input unit configured to receive a signal corresponding to a number to be interconnected with a folder stored on the mobile communication terminal; and
a controller configured to interconnect the folder with the selected number such that when the number is entered on the input unit in a prescribed manner, the control unit automatically displays the folder on a display unit of the terminal.

20. The mobile communication terminal of claim 19, wherein the control unit is further configured to enter into a number managing mode that allows the number to be selected when a number managing mode command is entered on the input unit, and
wherein the control unit displays on the display unit a plurality numbers that may be selected in a table form or in a list form.

21. The mobile communication terminal of claim 19, wherein the control unit is further configured to search for folders on the mobile terminal when the signal corresponding to the selected number is received and to interconnect a selected folder with the number when the selected folder is selected.

22. The mobile communication terminal of claim 19, wherein the control unit is further configured to interconnect a particular function on the mobile communication terminal with the folder and the number such that when the particular function is executed on the mobile communication terminal, a content included in the folder is executed, and
wherein the particular function is a calling function or a message writing function.

23. A mobile communication terminal, comprising:
an input unit configured to receive a signal corresponding to a number interconnected with a folder stored on the mobile communication terminal; and
a control unit configured to play content stored within the folder interconnected to the number when the number is entered on the terminal in a prescribed manner.

24. The mobile communication terminal of claim 23, wherein the control unit is further configured to play the content stored in the folder when the number is input into the input unit followed by another input command.

25. The mobile communication terminal of claim 23, wherein the signal corresponding to the number comprises one of a wireless signal from another party, a call signal, and a message signal.
